# EUROPEAN PATENT SPECIFICATION

(11) **EP 1 970 596 B1**
(45) Date of publication and mention of the grant of the patent: **29.06.2011**
(21) Application number: 08004598.2
(22) Date of filing: 12.03.2008
(51) Int. Cl.: F16G 13/02, F16G 13/04

(54) **Chain**
Kette
Chaîne

(30) Priority: 12.03.2007 JP 2007062062
(43) Date of publication of application: 17.09.2008
(73) Proprietor: Honda Motor Co., Ltd., Minato-ku Tokyo 107-8556 (JP)
(72) Inventor: Fujiwara, Akira c/o Honda R&D Co., Ltd., Wako-shi Saitama 351-0193 (JP)
(74) Representative: Trossin, Hans-Jürgen

(56) References cited:
- FR-A- 500 763
- GB-A- 111 976
- JP-A- 2003 301 888
- US-A- 6 068 568
- US-A1- 2003 177 752

## Description

### FIELD OF THE INVENTION

The present invention relates to a chain formed by connecting with connecting pins a plurality of link plates, such as a silent chain and a leaf chain.

### DESCRIPTION OF THE RELATED ART

In recent years, a silent chain has been used as a camshaft drive chain, an oil pump drive chain and a balancer shaft drive chain and the like in a vehicle and an industrial machinery. A silent chain includes a plurality of link plates, each including a pair of pin holes and a plurality of connecting pins, each of which extends through a plurality of the pin holes to connect the plurality of adjacent link plates to form an endless loop. The silent chain is engaged with a drive sprocket and a driven sprocket so as to transmit power from the drive sprocket to the driven sprocket.

In GB 111 976 A on which the preamble of claim 1 is based, figure 2, the hardened portions F have a similar geometrical shape as in the present invention, but they are formed by separately made hardened segmental bushes f received in the pin holes. The separate production of the segmental bushes and the inserting process seems very complicated.

In JP 2003 301888 A, the inner link plates ILP are applied to a precipitation hardening of stainless steel, high-carbon chrome bearing steel, etc., in such a way that the total surface area and therefore also the total inner surface (360°) of the pin hole of each ILP is covered by this material.

In US-A-6068568, the total inner circumferences (360°) of the pin holes 2 are subjected to shaving.

In US 2003/1777 52 A1, the total inner circumference (360°) of the pin hole is subjected to DLC (diamond-like carbon coating).

In FR 500 763 A, the total inner circumference (360°) of the pin hole 4 is hardened.

In the operation of transmitting the power from the drive sprocket to the driven sprocket, the link plate and the connecting pin wear, the pin hole of the link plate becomes larger, and the connecting pin becomes thinner, which results in elongation of the silent chain. In order to reduce the elongation of the chain, it has been proposed, for example, in Japanese Laid-open Patent Publication 2003-301888 and Japanese Laid-open Patent Publication 2006-132637, to provide surface-hardening treatment on surfaces of the link plate and the connecting pin.
However, it has been known that a conventional silent chain has a disadvantage that its chain strength becomes lower so that it is likely to be disconnected easily. When the silent chain is disconnected, a breakage point occurs at a pin hole of the link plate. It is understood that this is because brittleness is increased and tensile strength is decreased on the link plate due to the surface-hardening treatment on the link plate.
But, wear of the link plate can not be reduced merely by omitting the surface-hardening treatment on the link plate. This problem seems to be common in any chain including a plurality of link plates, each of which includes a pair of pin holes and a plurality of connecting pins, each extending through a plurality of the pin holes for connecting the plurality of adjacent link plates to form an endless loop, including a leaf chain without limited to the silent chain. The present invention is made in view of the above problems, and an object thereof is to provide a chain which enables to reduce wear of the link plate without decreasing the tensile strength of the link plate.

This object is achieved by a chain according to claim 1.

In the aforementioned chain, the link plate includes a body plate and a higher-hardness layer which forms the higher-hardness surface in the inner circumference and is harder than the body plate.
In the aforementioned chain, the higher-hardness layer is composed of first carbide, and a surface of the connecting pin is composed of second carbide whose component element is different from that of the first carbide.

In the aforementioned chain, when the link plate is plainly viewed, a higher-hardnes-surface presence angle which is defined by a half line extending from a center of a circle of the either of the pin holes to outside of the link plate and a line segment connecting the higher-hardness surface and the center of the either of the pin holes falls in an angular-range from more than 0 degree to less than 90 degree, wherein the half line exists on a straight line connecting the center of the circle of the either of the pin holes and a center of a circle of the other of the pin holes.

In the aforementioned chain, the link plate includes a pair of link teeth whose arrangement direction is parallel to the arrangement direction of the pair of pin holes 4, and the chain functions as a silent chain.

Other features and advantages of the present invention will become more apparent from the following detailed descriptions of the invention when taken in conjunction with the accompanying drawings.

### BRIEF DESCRIPTION OF THE DRAWINGS

FIG. 1 is a perspective view of a chain 1 (a silent chain) according to an embodiment of the present invention where its endless loop is disconnected.
FIG. 2 is a cross-sectional view along A-A line in FIG. 1.
FIG. 3 is a front view of the chain 1 (the silent chain) according to the embodiment of the present invention where its endless loop is disconnected.
FIG. 4 is a cross-sectional view along B-B line in FIG. 2
FIG. 5 is a front view of a link plate.
FIG. 6 is a cross-sectional SEM image along C-C line in FIG. 5.
FIG. 7 is a perspective view showing periphery of a sample holder of a tensile strength test apparatus with a link plate held by the sample holder.
FIG. 8 is a graph showing relationships of an angular-range where a higher-hardness surface presents and tensile strength of a link plate.

### DETAILED DESCRIPTION OF THE INVENTION

Embodiment of the present invention is explained in detail with reference to the accompanying drawings. Like reference characters designate corresponding parts in the drawings, and detailed description thereof will be omitted. As for a plurality of corresponding parts, e.g. link plates, reference characters will be omitted for some parts in the corresponding parts. A silent chain is taken as an example of a chain 1 in this embodiment, however, the present invention may be applied to any chain which includes a plurality of link plates, each of which has a pair of pin holes and a plurality of connecting pins, each of which extends through a plurality of the pin holes so as to connect the plurality of adjacent link plates to form an endless loop, including a leaf chain without limited to a silent chain.

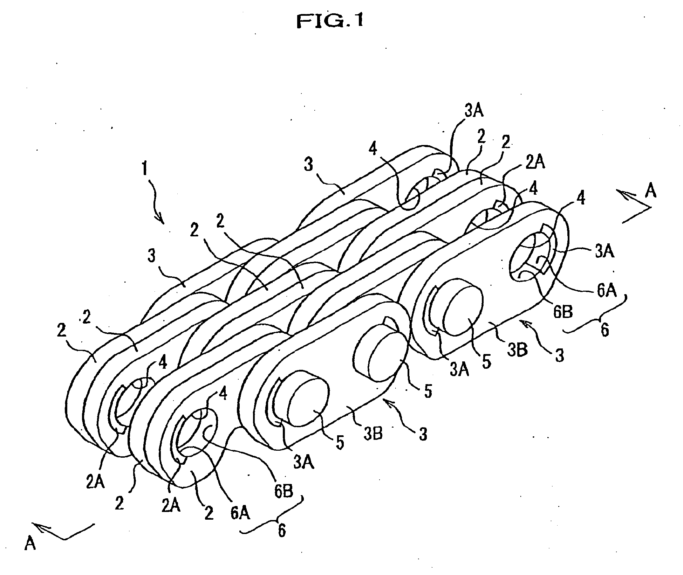

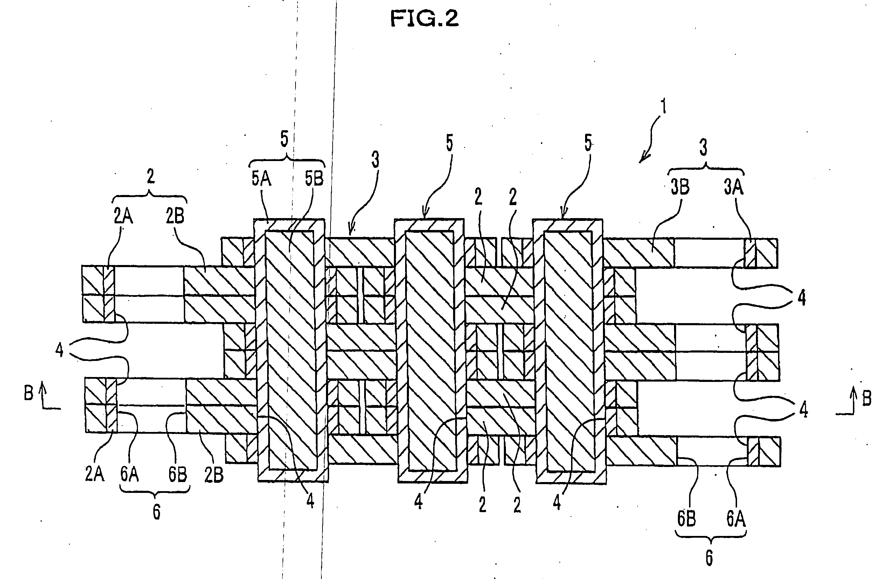

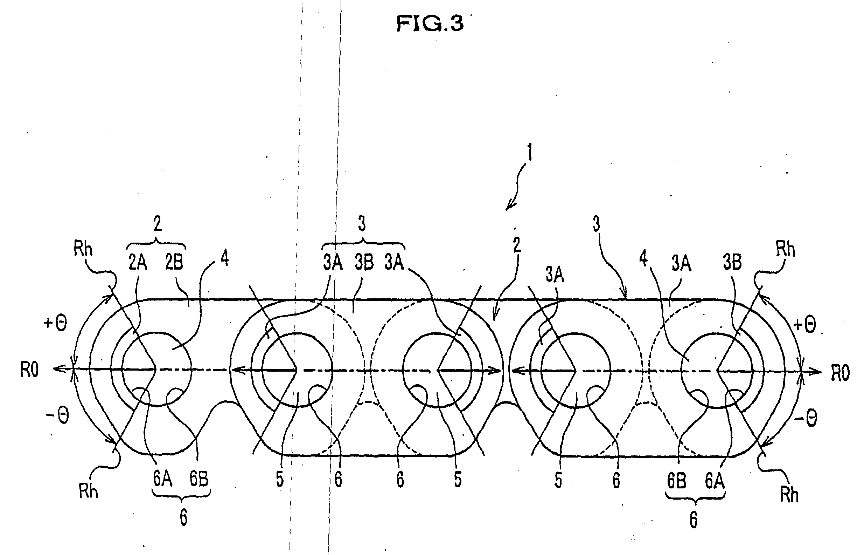

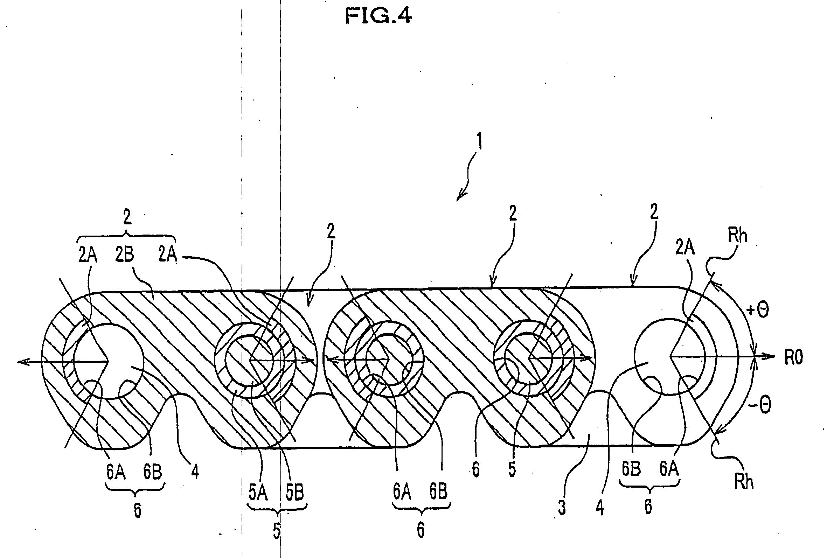

FIG. 1 is a perspective view of a chain 1 (the silent chain) according to the embodiment of the present invention where its endless loop is disconnected. FIG. 2 is a cross-sectional view along A-A line in FIG. 1. FIG. 3 is a front view of the chain 1 (the silent chain). FIG. 4 is a cross-sectional view along B-B line in FIG. 2.

The chain 1 (the silent chain) includes a plurality of link plates 2, each having a pair of pin holes 4 and a plurality of connecting pins 5, each extending through a plurality of the pin holes 4 so as to connect the plurality of adjacent link plates 2 with each other. Although only four rows of the link plates 2 are depicted in FIG. 1 for convenience of the explanation, dozens or hundreds of rows of the link plates 2 are connected in practical use. The connecting pin 5 is extended through one of the pair of pin holes 4 (of one of the link plates 2) and the other one of the pair of pin holes 4 (of another link plate 2). Thus, the link plates 2 can be connected to form the silent chain 1 having an endless loop.

Rows of plates in a width direction of the chain 1 having four link plates 2 and two link plates 2 respectively are connected alternately. The guide plates 3 are disposed at the ends of the row which is composed of two link plates 2. Similarly to the link plate 2, the guide plate 3 includes a pair of pin holes 4, and the connecting pin 5 extends through the pin hole 4 of the guide plate 3. At the pin hole 4 of the guide plate 3, the connecting pin 5 is fixed to the guide plate 3 to prevent the connecting pin 5 from being fallen off. The number of link plates 2 can be increased or decreased according to the required load capability of the chain without limited to two or four link plates.

As shown in FIG. 2, the connecting pin 5 includes a core part 5B and a surface layer 5A formed to coat the core part 5B. The hardness of the surface layer 5A is higher than that of the core part 5B. Thus, wear of the connecting pin 5 can be reduced.

Although, in this embodiment, two link plates 2 stuck together are disposed, three link plates 2 stuck together may be disposed, or only one link plate 2 may be disposed. The link plate 2 includes a body plate 2B and a higher-hardness layer 2A of which hardness is higher than that of the body plate 2B. The higher-hardness layer 2A is formed along the inner circumference surface 6 such that the higher-hardness layer 2A is exposed to the inner circumference surface 6 of the pin hole 4 of the link plate 2. A part of the inner circumference surface where the body plate 2B is exposed may be made to be a lower-hardness surface 6B, and the other part of the inner circumference surface where the higher-hardness layer 2A is exposed may be made to be the higher-hardness surface 6A, whose hardness is higher than that of the lower-hardness surface 6B.

Similarly to the link plate 2, the guide plate 3 includes a body plate 3B and a higher-hardness layer 3A of which hardness is higher than that of the body plate 3B. The higher-hardness layer 3A is formed along the inner circumference surface 6 such that the higher-hardness layer 3A is exposed to the inner circumference surface 6 of the pin hole 4 of the link plate 3. A part of the inner circumference surface where the body plate 3B is exposed may be made to be a lower-hardness surface 6B, and the other part of the inner circumference surface where the higher-hardness layer 3A is exposed may be made to be the higher-hardness surface 6A, whose hardness is higher than that of the lower-hardness surface 6B. Because power is not directly transmitted from a drive sprocket to the guide plate 3, the higher-hardness layer 3A may be omitted if tensile stress working on the guide plate 3 can be made to be smaller than that on the link plate 2.

In the link plate 2 and the guide plate 3, the higher-hardness layer 2A, 3A and the higher-hardness surface 6A are positioned on a part of the inner circumference surface 6 of one of the pair of pin holes 4 which is far from the other one of the pair of pin holes 4.

In other words, the higher-hardness layer 2A, 3A and the higher-hardness surface 6A are formed on parts, each facing to each other, of the inner circumference surfaces 6. Thus, as the relative position of the higher-hardness surface 6A to the lower hardness surface 6B, the distance from the higher-hardness surface 6A of the one of the pair of pin holes 4 to the other one of the pair of pin holes 4 is longer than that from the lower-hardness surface 6B to the other one of the pair of pin holes 4.

By arranging the higher-hardness layer 2A, 3A and the higher-hardness surface 6A as described above, when power is transmitted to the silent chain, even though two connecting pins 5 fitted into the link plate 2 and the guide plate 3 exert a force on the link plate 2 and the guide plate 3 in a direction for widening the distance between the connecting pins 5, the point of application of the force is on the higher-hardness surface 6A and wear occurs at that point, whereby wear of the pin hole 4 can be reduced.

On the other hand, because the lower-hardness surface 6B is also formed on inner circumference surface 6 of the pin hole 4, it is possible to reduce brittleness of the pin hole 4, which results in decrease in the brittleness of the link plate 2 and the guide plate 3, and to increase tenacity thereof. Thus, the tensile strength of the link plate 2 and the guide plate 3 can be increased to the level of the link plate and the guide plate which are not subjected to the surface-hardening treatment. As explained above, in accordance with this embodiment, it is possible to reduce the wear of the link plate 2 and the guide plate 3 without decreasing the tensile strength thereof.

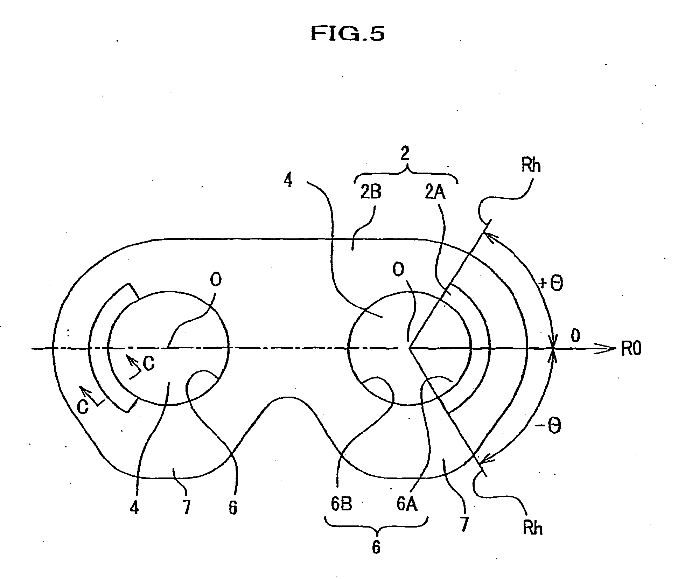

FIG. 5 is a front view of the link plate 2. The link plate 2 includes a pair of link teeth 7 of which arrangement direction is parallel to the arrangement direction of the pin holes 4. The link teeth 7 are meshed with teeth of the drive sprocket and the driven sprocket. When the link teeth 7 are omitted from the link plate 2, the shape of the link plate 2 becomes the same as that of the guide plate 3, and the chain 1 can be functioned as a leaf chain.

As seen in FIG. 3, FIG. 4 and FIG. 5, when the link plate 2 and the guide plate 3 are plainly viewed, higher-hardness-surface presence angles + θ and - θ are defined by a half line R0 (on a straight line connecting the center of each circle of the pair of pin holes 4) extending from the center O of the circle of one of the pair of the pin holes 4 to outside of the link plate 2 and the guide plate 3 and a line segment Rh connecting the higher-hardness surface 6A to the center of the one of the pair of pin holes 4. Hereinafter, a range represented by the higher-hardness-surface presence angles + θ and- θ is referred to as an angular-range where the higher-hardness surface 6A presents, and relationships of the angular-range where the higher-hardness surface 6A presents and the tensile strength of the link plates 2 are revealed as described below.

Six samples, each of which has a different angular-range where the higher-hardness surface 6A presents were prepared. The angular-range where the higher-hardness surface 6A presents of each sample is shown below.
Sample 1: 0 degree (no higher-hardness surface 6A was formed)
Sample 2: ±45 degree (a range from 0 to +45 degree, and a range from 0 to-45 degree)
Sample 3: "±60 degree" (a range from 0 to +60 degree, and a range from 0 to - 60 degree)
Sample 4: "±90 degree" (a range from 0 to +90 degree, and a range from 0 to-90 degree)
Sample 5: "± 120 degree" (a range from 0 to + 120 degree, and a range from 0 to-120 degree)
Sample 6: "360 degree" (the higher-hardness surface 6A is formed on the entire circumference.)

A method for manufacturing the link plate 2 (the samples 1 to 6) is explained below.

At first, a carbon steel member of 0.5C was press-cut into a desired shape, and subjected to polishing by barrel tumbling. The carbon steel was further subjected to finishing barrel tumbling so that its surface roughness of the inner circumference 6 of the pin holes 4 became less than 0.6 µ mRz.

Next, the inner circumference 6 where carbon steel was exposed is subjected to chromizing treatment by a powder pack process as a diffusion coating. In the diffusion coating, chrome is made to diffuse into the inner circumference 6 by using a treatment agent. In the powder pack process, powder was used for the treatment agent. As the treatment agent, the mixed powder of chrome powder as diffusion material, alumina (Al2O3) as an untisintering agent, ammonium chloride (NH4Cl) as an activator, sodium fluoride (NaF) and aluminum fluoride (AlF3) was used.

Then, the treatment agent was filled with the pin holes 4. More specifically, the treatment agent was filled with a part of the inner circumference 6 where the higher-hardness surface 6A of each sample (samples 1 to 6) is formed, and only alumina powder was filled with the rest of the inner circumference 6 so that the rest of the inner circumference 6 was not subjected to the chromizing treatment. Then, the carbon steel member is heated for fifteen hours in the presence of argon (Ar) at treatment temperature of 1173K. Thus, the high-hardeness layer 2A composed of chromium carbide (CrC) is formed only on the part of the inner circumference 6 with which the treatment agent is filled.

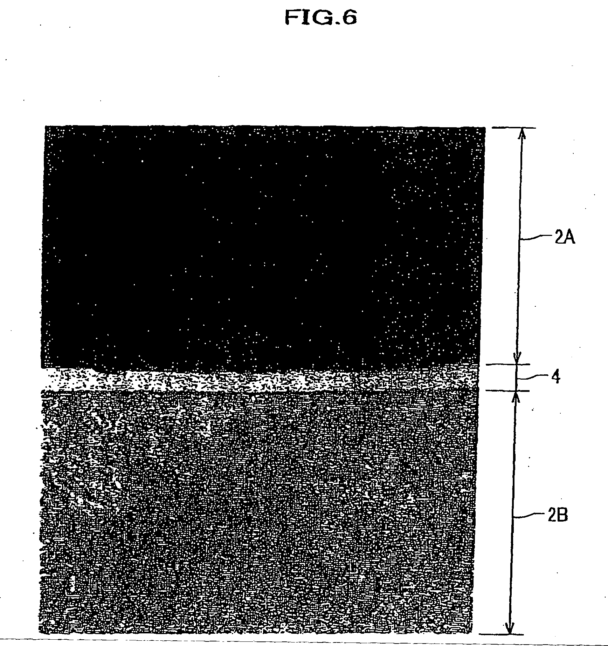

FIG. 6 is a cross-sectional SEM image of the higher-hardness layer 2A and the body plate 2B. As seen in FIG. 6, the chromizing treatment produced the high-hardness layer 2A composed of chromium carbide (CrC) of which thickness was 7 µ m. Vickers hardness of the chromium carbide was HV1650. The samples 1 to 6 were prepared as described above.

The connecting pin 5 was also prepared. The connecting pin 5 was manufactured by using the powder pack process- The connecting pin 5 was heated with treatment powder composed of vanadium (V) as the diffusion material instead of chrome. Vanadium carbide layer was formed on the surface layer 5A, and then the connecting pin 5 was subjected to polishing by barrel tumbling so that the roughness of the surface became less than 0.2 *µ* mRz. Vickers hardness of the vanadiium carbide layer was HV2200.

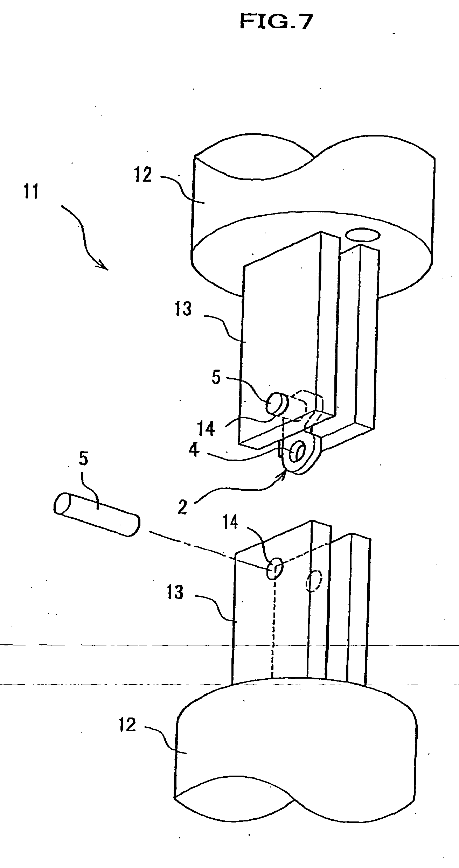

Then, a tensile strength test is carried out on the samples 1 to 6 (link plates 2) by using a tensile strength test apparatus 11 shown in FIG. 7. The tensile strength test apparatus 11 includes an upper member and a lower member, each including a base 12 and a pin support base 13 which is supported by the base 12. Each pin support base 13 of the upper member and the lower member includes a pin support hole 14 for supporting the connecting pin 5. The link plate 2 is fixed to the pin support bases 13 of the upper member and the lower member by fitting the connecting pins 5 into the pair of the pin holes 4 of the link plate 2 and the pin support holes 14. Then, the strength of a single link plate is measured by increasing a load on the single link plate at the rate of 10kgf/sec. (i.e. 98N/sec.).

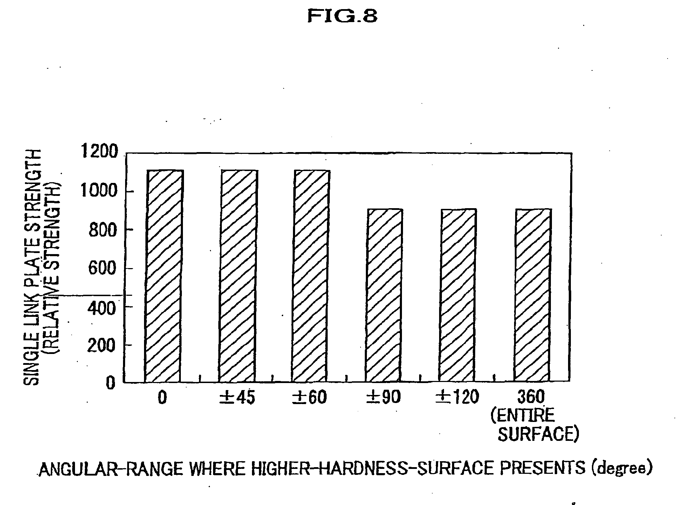

FIG. 8 shows a result of the tensile strength test. The result shows that because no higher-hardness surface 6A was formed on the inner circumference surface 6 of the sample 1, the sample 1 has high tenacity and high tensile strength. On the other hand, the result shows that because the higher-hardness surface 6Ais formed on the entire circumference of the inner circumference surface 6 of the sample 6 "360 degree (entire circumference)", the sample 6 had lower tenacity, and thus its brittleness became increased and its tensile strength became decreased.

It should be noted that only sample 4 "±90 degree" and the sample 5 "± 120 degree" showed decrease in their tensile strength similarly to the sample 6. The sample 2 " ± 45 degree" and the sample 3 " ± 60 degree" in which the higher-hardness-surface presence angle-range was narrower than ±90 degree had high tensile strength which was almost the same as that of the sample 1 "0 degree". It can be concluded from the above result that in order to obtain high tensile strength, the angular-range where the higher-hardness-surface 6A presents is set to be a range from 0 to + 90 degree and a range from -90 to 0 degree.

When the higher-hardness layer 2A is formed by the diffusion coating such as the powder pack process using the carbon steel member for the body plate 2B, the higher-hardness layer 2Ais not limited to be formed by the chromium carbide (CrC), but may also be formed by other higher-hardness carbide such as titanium carbide (TiC), zirconium carbide (ZrC), vanadium carbide (VC), niobium carbide (NbC), tantalum carbide (TaC), chromium carbide (Cr3C2), molybdenum carbide (Mo2C), and tungsten carbide (W2C, WC). The surface layer 5A of the connecting pin 5 may also be formed by the higher-hardness carbide described above, similarly to the higher-hardness layer 2A. However, the surface layer 5A of the connecting pin 5 is preferably formed by higher-hardness carbide of which constituent element is different from higher-hardness carbide which forms the higher-hardness layer 2A.
This is because if the constituent element of the higher hardness carbide is different between the surface layer 5A of the connecting pin 5 and the higher-hardness layer 2A, it is possible to prevent the higher- hardness layer 2A and the surface layer 5A of the connecting pin 5 from adhering to each other as well as to reduce wear of the connecting pin 5 and the link plate 2.
The method for forming the higher-hardness layer 2A and the surface layer 5A of the connecting pin 5 is not limited to the diffusion coating. Material to be used is not limited to carbide either. For example, titanium boride (TiB2), tungsten boride (WB), vanadium boride (VB2), and tantalum nitride (TaN) and the like may be used as material of the higher-hardness layer 2A and the surface layer 5A of the connecting pin 5.
The embodiment according to the present invention has been explained as aforementioned. However, the embodiment of the present invention is not limited to this embodiment, and those skilled in the art ascertain the essential characteristics of the present invention and can make the various modifications and variations to the present invention to adapt it to various usages and conditions without departing from the scope of the claims.

Disclosed is a chain which includes a plurality of link plates 2, each of which has a pair of pin holes 4 and a plurality of connecting pins 5, each of which extends through a plurality of the pin hole 4 for connecting a plurality of adjacent link plates 2, wherein an inner circumference 6 of one of the pair of pin holes 4 includes a lower-hardness surface 6B and a higher-hardness surface 6A which is harder than the lower-hardness surface 6B, and wherein a distance from the other one of the pair of pin holes 4 to the higher-hardness surface 6A is larger than that to the lower hardness surface 6B.

## Claims

1. A chain comprising:
a plurality of link plates (2), each of which includes a pair of pin holes (4), and
a plurality of connecting pins (5), each of which extends through a plurality of the pin holes (4) for connecting the plurality of adjacent link plates (2) to form an endless loop,
wherein an inner circumference (6) of either of the pin holes (4) comprises:
a lower-hardness surface (6B), and
a higher-hardness surface (6A) which is harder than the lower-hardness surface (6B),
wherein
a distance from the other of the pin holes (4) to the higher-hardness surface (6A) is longer than that to the lower-hardness surface (6B)
wherein when the link plate (2) is plainly viewed,
a higher-hardness-surface presence angle (+θ, -θ) which is defined by a half line (RO) extending from a center (O) of a circle of either of the pin holes (4) to the outside of the link plate (2) and a line segment (Rh) connecting the higher-hardness surface (6A) and the center (O) of the either of the pin holes (4) falls in an angular-range from more than 0 degree to less than 90 degree,
wherein the half line (RO) exists on a straight line connecting the center (O) of the circle of
either of the pin holes (4) and a center of a circle (O) of the other of the pin holes (4) **characterized in that** the higher-hardness surface (6A) is made by chromizing treatment by
a powder pack process as a diffusion coating.

2. The chain of claim 1, wherein the link plate comprises:
a body plate (2B), and
a higher-hardness layer (2A, 3A) which forms the higher-hardness surface (6A) in the inner circumference (6) and is harder than the body plate (2B).

3. The chain of claim 2,
wherein the higher-hardness layer (2A, 3A) is composed of first carbide, and a surface of the
connecting pin (5) is composed of second carbide whose component element is different from that of the first carbide.

4. The chain of claim 1, 2 or 3,
wherein the link plate (2) comprises a pair of link teeth (7) whose arrangement direction is parallel to an arrangement direction of the pair of pin holes (4), and the chain (1) functions as a silent chain.

## Patentansprüche

1. Kette, umfassend:
eine Mehrzahl von Verbindungsplatten (2), deren jede ein Paar von Bolzenlöchern (4) enthält, und
eine Mehrzahl von Verbindungsbolzen (5), deren jeder sich durch eine Mehrzahl der Bolzenlöcher (4) erstreckt, um die Mehrzahl von benachbarten Verbindungsplatten (2) zur Bildung einer Endlosschleife zu verbinden,
worin ein Innenumfang (6) eines jeweiligen der Bolzenlöcher (4) aufweist:
eine Oberfläche (6B) mit geringerer Härte, und
eine Oberfläche (6A) mit höherer Härte, welche härter ist als die Oberfläche (6B) geringerer Härte, worin
ein Abstand von dem anderen der Bolzenlöcher (4) zu der Oberfläche (6A) mit höherer Härte länger ist als jener zu der Oberfläche (6B) mit geringerer Härte,
worin, in Draufsicht der Verbindungsplatte (2), ein an der Oberfläche mit höherer Härte vorhandener Winkel (+θ, -θ), der durch eine Halblinie (RO),
die sich von einer Mitte (O) eines Kreises eines jeweiligen der Bolzenlöcher (4) zur Außenseite der Verbindungsplatte (2) erstreckt, und
ein Liniensegment (Rh), das die Oberfläche (6A) mit höherer Härte und die Mitte (O) des jeweiligen der Bolzenlöcher (4) verbindet, definiert ist, in einen Winkelbereich von mehr als 0 Grad bis weniger als 90 Grad fällt,
worin die Halblinie (RO) auf geraden Linie liegt, welche die Mitte (O) des Kreises eines jeweiligen der Bolzenlöcher (4) und eine Mitte eines Kreises (O) des anderen der Bolzenlöcher (4) verbindet,
**dadurch gekennzeichnet, dass** die Oberfläche (6A) mit höherer Härte durch Chromatierungsbehandlung durch einen Pulverpackprozess als Diffusionsbeschichtung hergestellt ist.

2. Die Kette von Anspruch 1, worin die Verbindungsplatte umfasst:
eine Rumpfplatte (2B), und
eine Schicht (2A, 3A) mit höherer Härte, die die Oberfläche (6A) höherer Härte im Innenumfang (6) bildet und härter ist als die Rumpfplatte (2B).

3. Die Kette von Anspruch 2, worin die Schicht (2A, 3A) mit höherer Härte aus erstem Carbid zusammengesetzt ist, und eine Oberfläche des Verbindungsbolzens (5) aus einem zweiten Carbid zusammengesetzt ist, dessen Zusammensetzungs-Element von jenem des ersten Carbids unterschiedlich ist.

4. Die Kette von Anspruch 1, 2 oder 3, worin die Verbindungsplatte (2) ein Paar von Verbindungszähnen (7) aufweist, deren Anordnungsrichtung parallel zur Anordnungsrichtung des Paars von Bolzenlöchern (4) ist, und die Kette (1) als geräuscharme Kette fungiert.

## Revendications

1. Chaîne comprenant :
une pluralité de plaques de maillon (2), dont chacune inclut une paire de trous de goupille (4), et
une pluralité de goupilles de raccordement (5), dont chacune s'étend à travers une pluralité des trous de goupille (4) pour raccorder la pluralité de plaques de maillon (2) adjacentes pour former une boucle infinie,
dans laquelle une circonférence interne (6) de l'un ou l'autre des trous de goupille (4) comprend :
une surface de dureté inférieure (6B),
une surface de dureté supérieure (6A) qui est plus dure que la surface de dureté inférieure (6B), dans laquelle
une distance allant de l'autre des trous de goupille (4) à la surface de dureté supérieure (6A) est plus grande qu'à la surface de dureté inférieure (6B),
dans laquelle lorsque la plaque de maillon (2) est vue distinctement,
un angle de présence de surface de dureté supérieure (+θ, -θ) qui est défini par une demi-ligne (RO) s'étendant depuis un centre (O) d'un cercle de l'un ou l'autre des trous de goupille (4) jusqu' à l'extérieur de la plaque de maillon (2) et un segment de ligne (Rh) reliant la surface de dureté supérieure (6A) et le centre (O) de l'un ou l'autre des trous de goupille (4) se trouve dans une plage angulaire de plus de 0 degré à moins de 90 degrés,
dans laquelle la demi-ligne (RO) existe sur une droite reliant le centre (O) du cercle de l'un ou l'autre des trous de goupille (4) et un centre d'un cercle O de l'autre des trous de goupille (4)
**caractérisée en ce que** la surface de dureté supérieure (6A) est préparée par un traitement de chromisation par un procédé de garnissage de poudre en tant que revêtement de diffusion.

2. Chaîne selon la revendication 1, dans laquelle la plaque de maillon comprend :
une plaque de corps (2B), et
une couche de dureté supérieure (2A, 3A) qui forme la surface de dureté supérieure (6A) dans la circonférence interne (6) et est plus dure que la plaque de corps (2B).

3. Chaîne selon la revendication 2,
dans laquelle la couche de dureté supérieure (2A, 3A) est composée d'un premier carbure, et une surface de la goupille de raccordement (5) est composée d'un second carbure dont l'élément composant est différent de celui du premier carbure.

4. Chaîne selon la revendication 1, 2 ou 3,
dans laquelle la plaque de maillon (2) comprend une paire de dents de maillon (7) dont la direction d'agencement est parallèle à la direction d'agencement de la paire de trous de goupille (4), et la chaîne (1) fonctionne comme une chaîne silencieuse.
